# EUROPÄISCHE PATENTSCHRIFT

(11) **EP 0 419 522 B1**
(45) Veröffentlichungstag und Bekanntmachung des Hinweises auf die Patenterteilung: **04.08.1993**
(21) Anmeldenummer: 89906707.8
(22) Anmeldetag: 10.06.1989
(51) Int. Cl.: F16F 9/46, B60G 17/08

(54) **HYDRAULISCHER SCHWINGUNGSDÄMPFER MIT VERÄNDERBARER DÄMPFUNGSCHARAKTERISTIK**
HYDRAULIC VIBRATION-DAMPER WITH VARIABLE DAMPING CHARACTERISTIC
AMORTISSEUR HYDRAULIQUE DE VIBRATIONS A PROPRIETES VARIABLES D'AMORTISSEMENT

(30) Priorität: 10.06.1988 DE 3819817
(43) Veröffentlichungstag der Anmeldung: 03.04.1991
(73) Patentinhaber: Obstfelder, Günther, 69469 Weinheim (DE)
(72) Erfinder: Obstfelder, Günther, 69469 Weinheim (DE)
(74) Vertreter: Mierswa, Klaus, Dipl.-Ing.
(86) Internationale Anmeldenummer: DE8900384
(87) Internationale Veröffentlichungsnummer: WO8912183

(56) Entgegenhaltungen:
- WO-A-85/04698
- DE-A- 1 430 177
- DE-A- 3 542 097
- DE-C- 490 157
- DE-C- 3 348 176
- DE-C- 3 503 152
- FR-A- 1 242 350
- US-A- 2 196 436
- US-A- 2 881 868

## Beschreibung

### Technisches Gebiet:

Die Erfindung betrifft einen hydraulischen Schwingungsdämpfer mit veränderbarer Dämpfungscharakteristik, insbesondere für Kraftfahrzeuge, gemäß dem Oberbegriff des Patentanspruchs 1.

### Stand der Technik:

Durch die DE-A-35 42 097 ist gemäß Oberbegriff des Anspruchs 1 ein regelbares Dämpfungsventilsystem mit veränderbarer Dämpfungscharakteristik für einen Schwingungsdämpfer, insbesondere für Kraftfahrzeuge, bekanntgeworden, bei dem zu den zwischen den Arbeitskammern angeordneten Durchlaß mindestens ein weiterer paralleler Durchlaß zwischen den Kammern vorgesehen ist, der unabhängig von einem ersten elektrischen Steuerschiebersystem durch ein weiteres elektrisch gesteuertes Steuerschiebersystem freigebbar oder verschließbar ist. Dabei können zwischen den Kammern weitere parallele Durchlässe mit je einem Steuerschiebersystem angeordnet sein, die unabhängig voneinander steuerbar sind.

Trotz der schnellen elektronischen Schaltmöglichkeiten besitzt dieses regelbare Dämpfungsventil - wie auch alle ähnlichen Dämpfungsventile - den Nachteil, daß die Dämpfungsflüssigkeit das eigentliche Dämpfungsventil durchströmen muß. Zum einen wird das Dämpfungsventil mit hohen Drücken beaufschlagt, zum anderen müssen in relativ kleinen Zeiten große Querschnitte auf- und zugeschaltet werden, um die gesteuerte bzw. geregelte Passage für das Dämpfungsmedium freizugeben oder zu verschließen. Dabei haben sich parallel geschaltete Einzelpassagen noch am vorteilhaftesten erwiesen, um große Mengen an Dämpfungsflüssigkeit in kurzen Zeiten zu schalten. Es bleibt jedoch der Nachteil, daß das Dämpfungsmedium, verteilt durch die Anzahl der parallelen Schieber, das Dämpfungsventil durchfließen muß, wodurch bei einer Mehrzahl von einzelnen elektrisch gesteuerten Schiebern der elektrische Aufwand beträchtlich ansteigt.

Durch die DE-A-35 03 152 ist ein Schwingungsdämpfer für Fahrzeuge bekanntgeworden, dessen Dämpferkurve willkürlich veränderbar sein soll, um die Dämpfung dem Fahrzustand optimal anzupassen. Ein Regelorgan ist durch eine Betätigungsvorrichtung in radialer Richtung fortschreitend an wenigstens eine Federscheibe des Ventil-Schließgliedes eines im Dämpferkolbens angeordneten Dämpfungsventils mit veränderbarer Kraft anpreßbar.

Durch die DE-C-33 48 176 ist ein regelbarer Kraftfahrzeug-Stoßdämpfer mit einem Dämpfungskolben innerhalb eines Zylinders bekanntgeworden, bei dem der Drosselventilkörper unter dem Einfluß einerseits des Flüssigkeitsdifferenzdrucks zwischen den beiden Arbeitskammernhälften und andererseits der durch den elektromagnetischen Antrieb hervorgerufenen Rückstellkraft steht. Zwischen dem Drosselventilkörper und dem seiner hydraulischen Verstellung entgegenwirkenden elektromagnetischen Antrieb ist eine hydraulische Kompensationseinrichtung in Gestalt einer Beaufschlagungskammer vorgesehen, die mit beiden Arbeitskammmerhälften über Leitungen verbunden ist, wobei ein vom elektromagnetischen Antrieb beaufschlagbares Hilfsventil eingebaut ist. In beiden letztgenannten Druckschriften werden kleine restliche Steuermengen des Dämpfungsmediums zum Ändern der Dämpfungscharakteristik benötigt.

Durch die DE-A-14 30 177 ist ein Reibungsschwingungsdämpfer für Fahrzeuge bekanntgeworden, bei dem der in einem Arbeitsraum herrschende Druck zu Verstellzwecken der Dämpfung herangezogen wird. Am Kolben ist eine zwischen zwei Flanschen angeordnete Reibhülse gehalten, die an den Zylinder mit einstellbarer Normalkraft anzudrücken ist, die mit Hilfe einer hohlen elastischen Blase zwischen Kolben und Zylinder erzeugt wird, in der durch Änderung einer pneumatischen Druckmittelfüllung durch die hohle Kolbenstange hindurch ein veränderlicher Innendruck einstellbar ist. Derartigen Schwingungsdämpfern wohnt der Nachteil inne, daß zum einen das Dämpfungsventil mit hohen Drücken beaufschlagt wird, zum anderen müssen auch hier in relativ kleinen Zeiten große Querschnitte auf- und zugeschaltet werden, um die gesteuerte Passage für das Dämpfungsmedium zu verändern.

### Technische Aufgabe:

Der Erfindung liegt die Aufgabe zugrunde, einen hydraulischen Schwingungsdämpfer der eingangs genannten Gattung zu schaffen, dessen Schließventil bei einfacher mechanischer und insbesondere elektrischer Konstruktion imstande ist, in relativ kurzen Schaltzeiten die maximale Fluidmenge zu schalten, ohne daß das Schließventil als solches durch Druck oder die Dämpfungsflüssigkeit in seiner Funktion beeinträchtigt wird.

### Darstellung der Erfindung und deren Vorteile:

Die Lösung dieser Aufgabe besteht erfindungsgemäß in den Merkmalen des Anspruchs 1. Weitere Ausgestaltungen der Erfindung sind in den Unteransprüchen gekennzeichnet.

Der erfindungsgemäße Schwingungsdämpfer benützt zur Steuerung bzw. Regelung der Dämpfung die Druckdifferenz innerhalb der beiden Arbeitskammern, wobei diese Druckdifferenz auf den Blähkörper zwischen Kolben und Zylinderwand aufgegeben wird, um deren Anpreßdruck an die Zylinderwandung mehr oder weniger zu erhöhen, das heißt zu regeln oder zu steuern. Der Schwingungsdämpfer besitzt dadurch den hervorstechenden Vorteil, daß nicht mehr die gesamte Menge an Strömungsmedium, die zur augenblicklichen Dämpfung von einer in die andere Arbeitskammer fließen muß, das Schließventil durchströmt, sondern nur noch eine geringe Menge, die sogenannte Steuermenge, das Schließventil passiert. Nur diese kleine restliche Steuermenge wird benötigt, um den Blähkörper entsprechend dem aufgebauten Druck innerhalb des abgeschlossenen Volumens desselben mehr oder weniger an die Zylinderwandung anzupressen. Weil der Durchlaß zwischen Kolben und Zylinder - die Verbindung der beiden Arbeitskammern - erheblich größer gemacht werden kann, als es der Durchgang eines elektrisch gesteuerten Durchlaßventils des Standes der Technik erlaubt, ist eine genauere und vor allen Dingen schnellere Reaktion und Schaltung des Schwingungsdämpfers möglich. Die Probleme, die bei größeren Durchflußmengen unter hohem Druck beim Stand der Technik auftreten, entfallen hier.

Ein weiterer entscheidender Vorteil des erfindungsgemäßen Schwingungsdämpfers besteht darin, daß bei Kolbengeschwindigkeit Null auch die Dämpfung gegen Null geht. Das heißt, daß in jedem Umkehrpunkt des Kolbens das System in den ungedämpften Zustand übergeht und sich dann die Dämpfung neu aufbaut. Dadurch ist in extremen Dämpfungssituationen bei maximalem Druckaufbau oder bei vorhandenem maximalen Druck innerhalb des Schwingungsdämpfers ein weiches Einschwingen desselben gewährleistet, die Dämpfungskraft verläuft sinusförmig. Je größer somit der Druck in Abhängigkeit der Kolbengeschwindigkeit anwächst, umso größer wird auch die Dämpfung, jedoch mit dem Unterschied zu herkömmlichen Schwingungsdämpfern, daß in den Umkehrpunkten des Kolbens die Dämpfung momentan gegen Null geht, da die Dämpfungskraft geschwindigkeitsproportional ist. Vorzugsweise kann der Kolben eine künstliche Leckage besitzen, deren Durchflußmenge zusätzlich eingestellt bzw. gesteuert werden kann, um den Druck innerhalb des Blähkörpers innerhalb der Nut nach der Umkehrung der Bewegungsrichtung des Kolbens sofort wieder aufzubauen und so die Elastizität des Blähkörpers zu unterstützen. Insbesondere dienen die künstlichen Leckagen dazu, das System beim Zusammenbau und bei der Inbetriebnahme zu entlüften. Die künstlichen Leckagen können auch aus einer Mehrzahl von feinen Löchern innerhalb des Blähkörpers bestehen, aus denen die innerhalb des Ringraumes des Blähkörpers befindliche Luft bei Inbetriebnahme zum Gasraum des Schwingungsdämpfers entweichen kann. Die Löcher sind vorzugsweise auf dem äußersten Umfang des Blähkörpers angeordnet. Gleichzeitig lassen die Löcher geringfügige Mengen an hydraulischer Dämpfungsflüssigkeit durch, so daß die Löcher auch zur dauernden Schmierung des auf der inneren Zylinderwandung aufliegenden Blähkörpers dienen.

Die Erfindung stellt somit einen veränderbaren Blähkörper zur Regelung bzw. Steuerung der Dämpfung in Abhängigkeit der Kolbengeschwindigkeit dar, der die augenblickliche Beeinflussung auch großer Durchflußmengen an Dämpfungsmedium erlaubt, ohne daß diese Durchflußmenge das Schließventil durchströmt. Das Schließventil wird nur von einer geringen Restmenge, die sogenannte Steuermenge, durchströmt, die zur Steuerung bzw. Regelung der Hauptmenge dient.

### Kurzbeschreibung der Zeichnung:

Zwei Beispiele der Erfindung sind in der Zeichnung dargestellt und anschließend beschrieben. Dabei zeigen:
- Figur 1: einen an einem Führungskolben befestigten Dämpfungskolben mit einer umlaufenden Nut und darin angeordnetem reifenförmigen Blähkörper,
- Figur 2: eine mögliche Verformung des Blähkörpers bei Druckaufgabe in die Nut und damit auf den Blähkörper
- Figur 3: einen Kolben mit zwei umlaufenden, übereinander angeordneten Teilnuten und darin angeordnetem Blähkörper, der aus zwei Teilblähkörpern besteht, wobei der Kolben gleichzeitig als Führungs- und Dämpfungskolben ausgebildet ist und
- Figur 4: einen vergrößerten Ausschnitt eines umlaufenden Blähkörpers eines weiteren Ausführungsbeispiels, der innerhalb der Berührungsflächen des Blähkörpers mit kleinen Löchern zur Entlüftung versehen ist.

### Wege zur Ausführung der Erfindung:

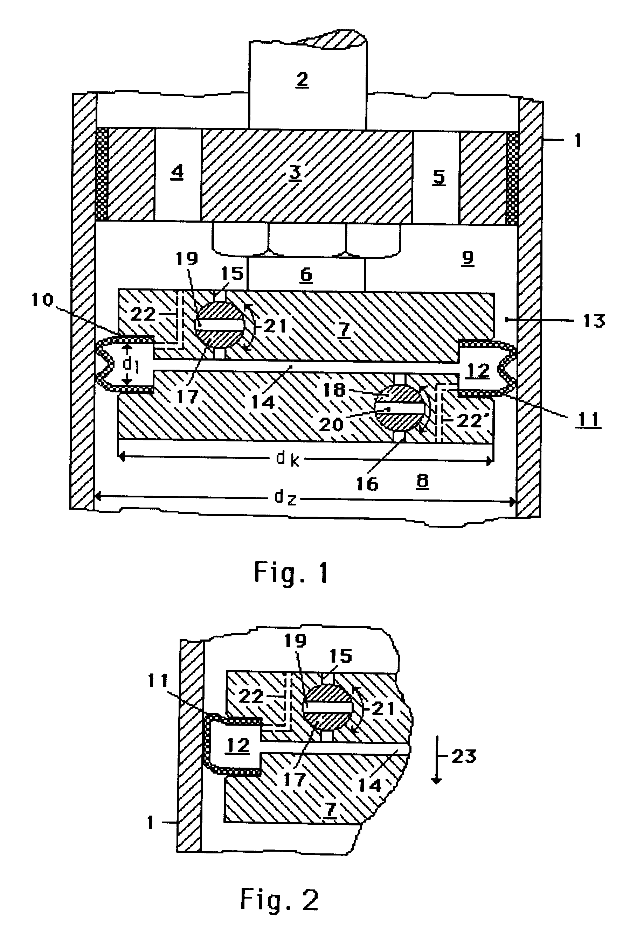

In Figur 1 ist schematisch eine Darstellung des Gegenstandes der Erfindung wiedergegeben, bestehend aus einem Zylinder 1, der nur teilweise gezeichnet ist, wobei in den Zylinder 1 eine an ihrem oberen Ende abgedichtet geführte Kolbenstange 2 eintaucht, die an ihrem unteren Ende einen Führungskolben 3 trägt, der Durchlässe 4,5 für das hydraulische Dämpfungsmedium aufweist. Die Durchlässe 4,5 können einen derartigen Querschnitt aufweisen, daß sie praktisch keine Dämpfung bewirken. Die Ausgestaltung und der Querschnitt der Durchlässe 4,5 können so gewählt sein, daß mit ihnen eine Grunddämpfung vorgegeben ist. Vorzugsweise sind der Zylinder 1, die Kolbenstange 2 und der Kolben 3 rotationssymmetrisch zur Längsachse des Zylinders und der Kolbenstange ausgestaltet.

Am unteren Ende 6 der Kolbenstange 2 - unterhalb des Führungskolbens 3 - ist ein Dämpfungskolben 7 angeordnet, dessen Durchmesser dk kleiner ist als der lichte Innendurchmesser dz des Kolbens 1, wobei vorzugsweise der Dämpfungskolben 7 mittig innerhalb des Zylinders 1 angeordnet ist, so daß zwischen der inneren Wandung des Zylinders 1 und dem Dämpfungskolben 7 ein peripher umlaufender, torusförmiger Durchlaß 13 verbleibt.

Der Dämpfungskolben 7 weist in seiner peripher umlaufenden Mantelwandung eine Nut 10 auf, die vorzugsweise im Schnitt längs eines Durchmessers eine quadratische oder rechteckförmige Gestaltung aufweist. In der Nut 10 ist ebenfalls umlaufend ein elastischer und verformbarer Blähkörper 11 angeordnet, der in geeigneter Weise mit der Nutenwandung abdichtend verbunden ist. Der Blähkörper 11 ist reifenförmig ausgestaltet und liegt einerseits mit seinen seitlichen, umlaufenden Wandungen innerhalb der Nut 10 an den inneren, seitlichen Nutenwandungen, andererseits mit seinem Umfang peripher umlaufend an der der Nut 10 gegenüberliegenden inneren Zylinderwandung an. Der Blähkörper 11 dichtet somit einerseits den von der Nut 10 und dem Blähkörper 11 umschlossenen Ringraum 12 gegen den torusförmigen Durchlaß 13 ab, andererseits unterbricht der Blähkörper 11 den torusförmigen Durchlaß 13 unter Anliegen seines Umfangs an der inneren Zylinderwandung. Auf diese Weise bildet der Blähkörper 11 zusammen mit dem Dämpfungskolben 7 eine untere und obere Arbeitskammer 8,9 aus, die durch den umlaufenden Blähkörper 11 voneinander getrennt sind.

Der umlaufende Ringraum 12 innerhalb der Nut 10 und der Blähkörper 11 können durch einen Kanal 14 in Richtung eines Durchmessers des Dämpfungskolbens 7 gegenüberliegend verbunden sein. In diesen Kanal 14 - oder in den Ringraum 12 direkt - münden je ein Verbindungskanal 15,16, wobei der Verbindungskanal 15 von der oberen Stirnfläche des Dämpfungskolbens 7, begrenzt von der Arbeitskammer 9, der Verbindungskanal 16 von der unteren Stirnfläche des Dämpfungskolbens 7, begrenzt von der unteren Arbeitskammer 8, ausgehen. Innerhalb beider Verbindungskanäle 15,16 ist je ein Schließventil 17,18 mit je einem Durchgang 19,20 angeordnet, wobei jedes Schließventil 17,18 von einer Offenstellung in eine Schließstellung bewegt werden kann, was durch den doppelten Bewegungspfeil 21 angedeutet ist. Die Schließventile sind vorzugsweise elektrisch ansteuerbar und dementsprechend in bekannter Weise ausgestaltet; die Schließventile können auch hydraulisch und/oder pneumatisch ansteuerbar bzw. bewegbar sein.

In den Kanal 14 können weitere Kanäle 22,22' münden, wobei jeweils ein Kanal jeweils von einer Stirnfläche des Dämpfungskolbens 7 ausgeht und somit jeweils eine Arbeitskammer 8,9 mit dem Ringraum 12 verbindet. Diese Kanäle 22,22' besitzen gewöhnlich einen geringeren Durchlaßquerschnitt, als der Kanal 14, wobei der Durchlaßquerschnitt der Kanäle 22,22' mittels eines geeigneten Drosselorgans, beispielsweise eine Stellschraube, vorgegeben oder auch geeignet gesteuert oder geregelt werden kann. Hauptsächlich dienen diese Kanäle zur Entlüftung des Systems bei Inbetriebnahme, weshalb vorzugsweise die Kanäle 22,22' an den höchsten Punkten des Ringraumes 12 des Umfangs angeordnet sind.

Die Funktionsweise des hydraulischen Schwingungsdämpfers ist folgende:

Es sei angenommen, daß sich die Kolbenstange 2 mitsamt dem Dämpfungskolben 7 nach unten bewegen, was in der Figur 2 durch die Richtung des Bewegungspfeils 23 dargestellt ist, so daß prinzipiell in der Arbeitskammer 8 ein Überdruck und in der Arbeitskammer 9 ein Unterdruck gegenüber gleichen Drücken in Ruhestellung des Dämpfungskolbens 7 entstehen. Jeweils dasjenige Schließventil, welches der Unterdruck erzeugenden, nachgezogenen Stirnfläche des Dämpfungskolbens 7 benachbart ist, ist immer geschlossen, so daß diejenige Arbeitskammer, in der ein Unterdruck entsteht - oder m.a.W.: in der die nachgezogene Stirnfläche des Dämpfungskolbens sich befindet - immer über die zugeordneten Verbindungskanäle zur Nut 10 und zum Ringraum 12 abgetrennt ist, so daß keine Verbindung zwischen derjenigen Arbeitskammer, in der gerade Unterdruck entsteht, und dem Ringraum 12 gegeben ist. Bei der angenommenen Bewegungsrichtung 23 des Dämpfungskolbens 7 nach unten bedeutet das somit, daß das Schließventil 17 geschlossen sein muß.

Nunmehr sind zwei verschiedene Zustände des Schwingungsdämpfers zu unterscheiden: Soll keine Dämpfung oder die geringstmögliche Dämpfung des Schwingungsdämpfers erzielt werden, so bleibt auch das Schließventil 18 während der Abwärtsbewegung des Dämpfungskolbens 7 geschlossen. Bei dieser Abwärtsbewegung des Dämpfungskolbens 7 entsteht in der Arbeitskammer 8 ein Überdruck, in der Arbeitskammer 9 ein Unterdruck. Durch den Überdruck wird die Dämpfungsflüssigkeit gezwungen, über den torusförmigen Ringraum 13 in die Arbeitskammer 9 zu strömen, wobei der Umfang der Blähkörper 11 von dem strömenden Dämpfungsmedium mehr oder weniger von der Innenwandung des Zylinders 1 weggedrückt wird, was durch die Sogwirkung innerhalb der Arbeitskammer 9 noch verstärkt wird. Eine Volumenverkleinerung innerhalb des Ringraumes 12 durch die Verformung des Blähkörpers 11 kann dadurch leicht erfolgen, daß die geringfügige zu verdrängende Menge von Dämpfungsflüssigkeit aus dem Ringraum 12 heraus durch den Kanal 22 in die Arbeitskammer 9 abfließt.

Soll nun bei der Abwärtsbewegung des Dämpfungskolbens 7 eine erhöhte Dämpfung gegenüber der minimalen Dämpfung erzielt werden, so wird dasjenige Schließventil mehr oder weniger geöffnet, welches derjenigen Arbeitskammer benachbart ist, in der sich ein Überdruck aufbaut oder m.a.W. welches der führenden Stirnfläche des Dämpfungskolbens benachbart ist. In dem hier gewählten Beispiel wird somit das Schließventil 18 mehr oder weniger geöffnet. Dadurch wird eine Verbindung zwischen der Arbeitskammer 8, dem Verbindungskanal 16, dem Kanal 14 und dem Ringraum 12 geschaffen. Innerhalb des Ringraumes 12 kann sich nunmehr der innerhalb der Arbeitskammer 8 herrschende Überdruck aufbauen, so daß sich der Blähkörper 11 gemäß der in Figur 2 gezeigten Stellung verformt und das Volumen innerhalb des Ringraumes 12 zunimmt. Dabei kann der Blähkörper 11 gemäß der in Figur 2 gezeigten Stellung dergestalt verformt werden, daß sich der Blähkörper 11 über eine größere Fläche an die Innenwandung des Zylinders 1 anpreßt als in Ruhestellung, wobei dieser Anpreßdruck noch durch die Sogwirkung, herrührend aus der mit Unterdruck beaufschlagten Arbeitskammer 9, verstärkt wird. Bei entsprechend kleinem Querschnitt des Kanals 22 ist die daneben zur Arbeitskammer 9 fließende Fluidmenge vernachlässigbar klein. In Folge des erhöhten Anpreßdruckes und der erhöhten Anpreßfläche des Blähkörpers 11 an die Innenwandung des Zylinders 1 kann nur noch entsprechend weniger Dämpfungsflüssigkeit durch den Durchlaß 13 von der Arbeitskammer 8 zur Arbeitskammer 9 strömen.

Die Hauptmenge des zwischen den Arbeitskammern 8,9 strömenden Dämpfungsmediums fließt nicht mehr über das Schließventil 18, sondern durch den dafür vorgesehenen ringförmigen Durchlaß 13, dessen Durchlaßquerschnitt durch den Umfang der elastischen Blähkörper 11 mehr oder weniger zwischen einer maximalen Durchlaßstellung in weggedrücktem Zustand und einer Schließstellung in angedrücktem Zustand des Blähkörpers 11 an die Zylinderwandung gesteuert bzw. geregelt wird.

Nur eine geringfügige Menge der hydraulischen Dämpfungsflüssigkeit, die sogenannte Steuermenge, fließt über den Verbindungskanal 16, den Durchgang 20 des Ventils 18 und den Kanal 14 in den Ringraum 12 zum Druckaufbau innerhalb des Ringraumes 12. Bei Vorhandensein der Kanäle 22 und 22' kann von dieser Steuermenge eine geringfügige Menge über den Kanal 22 in die Arbeitskammer 9 abfließen. Ist der Durchlaßquerschnitt der Kanäle 22,22' ebenfalls steuerbar, so kann der Kanal 22 in diesem Fall zugesteuert werden.

Eine beliebige Steuerung der Dämpfung kann nun erzielt werden, daß das entsprechende Schließventil mehrere Zwischenstellungen zwischen einer maximalen Offen- und einer Schließstellung aufweist und darüber hinaus der Einsetzpunkt der Ansteuerung des Schließventils von der örtlichen, relativen Stellung des Dämpfungskolbens innerhalb des Zylinders 1 abhängig gemacht wird.

Bei der umgekehrten Bewegung des Dämpfungskolbens 7 nach oben, wenn somit nach der Umkehrung der Bewegungsrichtung des Dämpfungskolbens 7 in der Arbeitskammer 8 ein Unterdruck und in der Arbeitskammer 9 ein Überdruck aufgebaut werden, wird zuerst dasjenige Schließventil geschlossen, welches derjenigen Arbeitskammer benachbart ist, in der sich ein Unterdruck aufbaut. Es wird immer dasjenige Schließventil geschlossen, welches der nachgezogenen Stirnfläche des Dämpfungskolbens 7 benachbart ist, im Beispiel wird somit das Ventil 18 geschlossen. Bleibt nunmehr das Ventil 17 ebenfalls geschlossen, so besitzt der Schwingungsdämpfer seine geringste Dämpfung, weil das hydraulische Fluid praktisch ungehindert von der Arbeitskammer 9 über den Durchlaß 13 unter Zusammendrücken des Blähkörper 11 bzw. Wegdrücken des Umfangs desselben von der Zylinderwandung hin zur Arbeitskammer 8 strömen kann. Die aufgrund der Volumenverkleinerung innerhalb des Blähkörpers 11 verdrängte Flüssigkeitsmenge wird bei Vorhandensein des Kanals 22' über denselben abgeführt, wobei dieser Kanal 22' gleich dem Kanal 22 aufgebaut ist. Soll hingegen eine Dämpfung bewirkt werden, so wird das Ventil 17 mehr oder weniger geöffnet, wodurch sich innerhalb der Kanalsysteme 15,14 und des Ringraumes 12 der in der Arbeitskammer 9 herrschende Überdruck aufbauen kann. Dadurch wird der Blähkörper 11 wiederum unter Vergrößerung seiner Anlagefläche und gegebenenfalls seines Volumens auseinandergepreßt und liegt unter erhöhtem Druck, der gleich dem momentanen Druck innerhalb der Arbeitskammer 9 ist, peripher an der Zylinderwandung an, wobei hier schematisch die Richtung der Ausbeulung des Blähkörpers 11 gegenüber der Figur 2 in umgekehrter Richtung nach unten zu denken ist.

Vorzugsweise ist der lichte Durchmesser dl innerhalb des Blähkörpers 11 innerhalb der Nut 10 größer, als die Differenz zwischen dem lichten Innendurchmesser dz des Zylinders 1 und dem Außendurchmesser dk des Dämpfungskolbens 7 gemäß der Formel dl > dz - dk , so daß die Gesamtfläche, unter der der Umfang der Dichtlippe 11 bei maximaler Dämpfung an der Innenwandung des Zylinders 1 anliegt, immer größer als der Durchlaßquerschnitt des ringförmigen Durchlasses 13 ist.

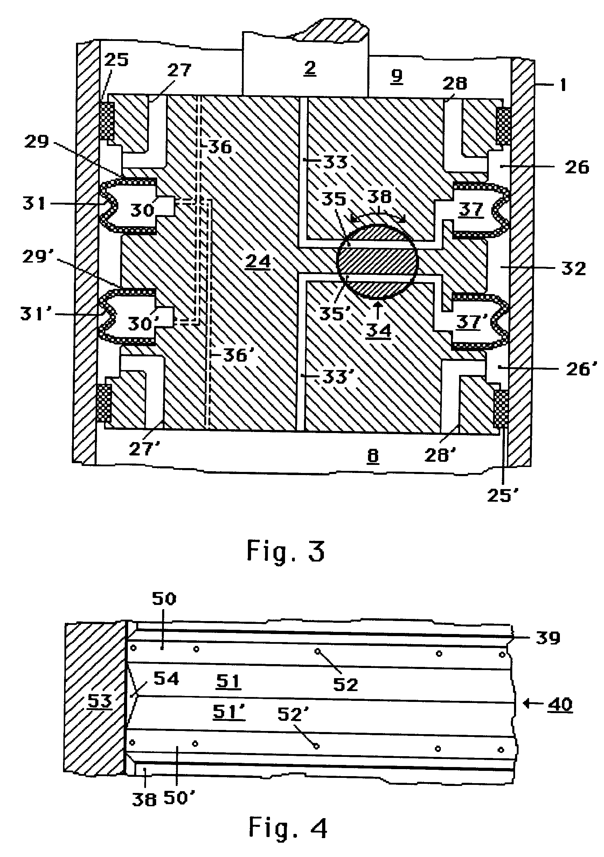

Die Figur 3 zeigt in schematischer Darstellung innerhalb eines Zylinders 1 an einer Kolbenstange 2 einen Kolben 24, der gleichzeitig als Dämpfungs- und Führungskolben ausgestaltet ist.

Der Dämpfungs- und Führungskolben 24 besitzt zwei übereinanderliegende Dämpfungssysteme. Dazu weist der Kolben 24 an seinem oberen und seinem unteren Ende je zwei peripher umlaufende Simmerringe 25,25' auf, die zur Abdichtung und Führung des Kolbens 24 gegenüber der Zylinderwandung des Zylinders 1 dienen. Von der oberen Stirnfläche des Kolbens 24 aus, die an den Arbeitsraum 9 angrenzt, der von der Kolbenstange 2 durchsetzt ist, führen Bohrungen 27,28, von der unteren Stirnfläche, die die Arbeitskammer 8 begrenzt, Bohrungen 27',28' zu einem torusförmigen Durchlaß 26,32,26', der über die genannten Bohrungen 27,28, 27',28' die beiden Arbeitskammern 8 und 9 miteinander verbindet. Die Bohrungen 27,27' und 28,28' können in ihren Querschnitten dergestalt gewählt und ausgestaltet sein, daß sie praktisch keine Dämpfung oder eine Grunddämpfung für das Dämpfungsmedium bewirken.

Zwischen den beiden Simmerringen 25,25' ist der Durchmesser des Kolbens 24 geringer als der lichte Durchmesser des Zylinders 1, so daß zwischen den Simmerringen 25,25' der torusförmige Durchlaß 26,32,26' zwischen der peripheren Mantelwandung des Dämpfungs- und Führungskolbens 24 und der inneren Wandung des Zylinders 1 zur Verbindung der beiden Arbeitskammern 8,9 ausgebildet wird.

Zwei Nuten 29, 29' sind umlaufend in der peripheren Mantelwandung des Dämpfungs- und Führungskolbens 24 angeordnet, wobei diese Nuten 29,29 vorzugsweise in Querschnittsebenen des Kolbens 24 übereinanderliegend angeordnet sind. Innerhalb der Nuten 29, 29' sind je ein peripher umlaufender Blähkörper 31, 31' angeordnet, die reifenförmig einerseits mit ihren Seitenwandungen an den Innenseiten der Nuten 29,29' und andererseits mit ihren peripheren Zirkumferenzen an der Innenwandung des Zylinders 1 dichtend anliegen. Die Nuten 29, 29', die Blähkörper 31, 31' und die Einpassungen derselben in die Nuten können dabei gemäß der Gestaltung der Figur 1 ausgebildet sein. Der obere Blähkörper 31 schließt mit dem oberen Simmerring 25 den Teil 26 des Durchlasses ein, zwischen den Blähkörpern 31, 31' befindet sich der Teil 32 des Durchlasses; zwischen dem Blähkörper 31' und dem unteren Simmerring 25' befindet sich der untere Teil 26' des gemeinsamen Durchlasses.

In jede Nut 29,29' ist ein verjüngter Ringkanal 30, 30' eingefräst, in den jeweils ein Verbindungskanal 33, 33' mündet, wobei der Verbindungskanal 33 von der oberen Stirnfläche, der untere Verbindungskanal 33' von der unteren Hauptoberfläche des Kolbens 24 ausgehen. Innerhalb der Verbindungskanäle 33,33' ist ein Schließventil angeordnet, welches hier als Doppelschließventil 34 mit zwei Durchgängen 35,35' ausgebildet ist, wobei jeweils einer der Durchgänge einen der Verbindungskanäle 33,33' hin zu den Ringräumen 37,37' innerhalb der Blähkörper 31,31' verbinden. Die Kanäle 33,33' haben untereinander keine gemeinsame Verbindung. Durch den Doppel-Bewegungspfeil 38 ist angedeutet, daß das Doppelschließventil 34, welches vorzugsweise elektrisch arbeitet, von der Schließstellung in die Offenstellung drehbar ist, gegebenenfalls unter einer Mehrzahl von Zwischenstellungen.

Die Wirkungweise dieses Schwingungsdämpfers ist folgende:

Es sei angenommen, daß sich der Kolben nach unten bewegt, so daß in der Arbeitskammer 8 ein Überdruck und in der Arbeitskammer 9 ein Unterdruck aufgebaut werden. Wird nun das Doppelschließventil 34 in seine Sperr-Richtung bewegt, so daß unter Schließen der beiden Kanäle 33,33' beide Ringräume 37,37' von den Arbeitskammern abgetrennt sind, so wird die geringstmögliche Dämpfung des Schwingungsdämpfers erhalten. Denn durch den sich aufbauenden Überdruck innerhalb des Durchlasses 26' wird der Umfang des Blähkörpers 31' innerhalb der Nut 29' zusammengepreßt und von der Innenwandung des Zylinders abgehoben, ebenso darauffolgend der Blähkörper 31 innerhalb der Nut 29. Die hydraulische Dämpfungsflüssigkeit kann praktisch ungehindert zwischen den Arbeitskammern 8 und 9 über den Durchlaß 26', 32, 26 hindurchströmen. Diese Wirkung wird durch die Sogwirkung innerhalb der oberen Arbeitskammer 9 noch verstärkt, wobei sich der Unterdruck ja in den Teil 26 des Durchlasses und von da in den Teil 32 fortpflanzt.

Soll hingegen eine Dämpfung bewirkt werden, so wird das Doppelschließventil 34 mehr oder weniger geöffnet und eine Verbindung zwischen den Verbindungskanälen 33,33' und dem zugehörigen Ringraum 37,37' hergestellt. Nunmehr kann sich innerhalb des Ringraumes 37' ein Überdruck aufbauen, der dem momentanen Überdruck innerhalb des Arbeitsraumes 8 entspricht, wodurch der Blähkörper 31' mehr oder weniger unter Volumenvergrößerung des Ringraumes und Vergrößerung der Anpreßfläche peripher der Umfang des Blähkörpers 31' an die Innenwandung des Zylinders 1 gepreßt wird, wodurch die Dämpfung entsprechend vergrößert wird. Dieses Anpressen des Blähkörpers 31' an die Zylinderwandung wird noch durch den innerhalb des Teils 32 des Durchlasses herrschenden Unterdruck verstärkt, da der Unterdruck der Arbeitskammer 9 sich dem Ringraum 37 über den Kanal 33 mitteilen kann. Unter Abhebung des Umfangs des Blähkörpers 31 von der Innenwandung des Zylinders wirkt derselbe praktisch nicht mehr dämpfend, weshalb der Unterdruck sich auch innerhalb des Teils 32 des Durchlasses aufbauen kann.

Bei umgekehrter Bewegungsrichtung des Kolbens 24 innerhalb des Zylinders 1 kehren sich die Verhältnisse um. Wenn innerhalb des Arbeitsraumes 9 ein Überdruck und innerhalb des Arbeitsraumes 8 ein Unterdruck aufgebaut werden, wird mittels des Verbindungskanals 33, des Doppelschließventils 34 und des Ringraumes 37 die Dämpfung in dieser Richtung mehr oder weniger gesteuert. Bei völlig geschlossenem Doppelschließventil 34 ist wiederum die geringste Dämpfung vorhanden, bei völlig geöffnetem Doppelschließventil 34 ist die maximale Dämpfung gegeben.

Ebenso können innerhalb des Kolbens 24 zwei Kanäle 36,36' mit geringerem Querschnitt als der Querschnitt der Kanäle 33,33' vorgesehen sein, wobei deren Durchlaß ebenfalls voreinstellbar sein kann. Der Kanal 36 ist mit dem Ringraum 37', der Kanal 36' mit dem Ringraum 37 verbunden, wobei diese Kanäle zum Ausgleich des Überdruckes innerhalb der Ringräume dienen, wenn nur eine geringfügige Dämpfung durch die Blähkörper erwünscht ist und deshalb ein eventuell herrschender Überdruck innerhalb der Blähkörper bei geschlossenem Kanalsystem und Doppelschließventil rasch ausgeglichen werden soll, um die Flexibilität der Blähkörper zu unterstützen. Insbesondere dienen diese Kanäle 36, 36' zur Entlüftung des Systems bei Inbetriebnahme und auch beim Zusammenbau des Schwingungsdämpfers, um die im System befindliche Luft in den Gasbehälter des Schwingungsdämpfers zu befördern.

In Figur 4 ist ein weiteres Ausführungsbeispiel eines Schwingungsdämpfers gezeigt, bestehend aus einem Zylinder 53, in welchem ein Kolben 38 angeordnet ist. Dieser Kolben 38 weist wiederum eine peripher umlaufende Nut 39 auf, innerhalb der ein umlaufender, ringförmiger Blähkörper 40 entsprechend den Blähkörpern der Figuren 1-3 angeordnet ist. Der Aufbau dieses Blähkörpers 40 ist ähnlich gestaltet wie die Blähkörper in den beschriebenen Figuren und besteht aus zwei umlaufenden Flächen 50, 50' des äußersten Umfangs des Blähkörpers 40, wobei diese beiden Flächen 50, 50' abdichtend an der Innenwandung des Zylinders 53 gleitend anliegen. Zwischen diesen beiden Flächen 50, 50' des äußersten Umfangs liegen zwei nach innen gewölbte Flächen 51, 51', die ebenfalls umlaufend sind und die zur Zylinderwandung des Zylinders 53 einen im Querschnitt ungefähr dreieckförmigen Hohlraum 54 belassen, wie es in Figur 4 dargestellt ist. Der Blähkörper 40 besitzt auf den Flächen 50, 50' des äußersten Umfangs kleine Löcher 52, 52', über die der von dem Blähkörper 40 umschlossene Ringraum (gemäß Figur 3 die Ringräume 37, 37') mit den Arbeitskammern in Verbindung steht. Die Löcher 52, 52' dienen einerseits zum Austritt der innerhalb der Kanäle befindlichen Luft bei Inbetriebnahme des Schwingungsdämpfers, so daß die Luft in den (nicht gezeigten) Gasraum des Schwingungsdämpfers entweichen kann, zum anderen dienen die Löcher 52, 52' dazu, daß aus ihnen geringfügige Mengen der hydraulischen Dämpfungsflüssigkeit hindurchtreten kann, um eine Schmierung der Flächen 50, 50' des äußersten Umfangs auf der Innenwandung des Zylinders 53 aufrechtzuerhalten. Der Durchmesser der Löcher 52, 52' ist dabei so bemessen, daß die Luft sicher entweichen kann, daß jedoch die Durchtrittsmenge der durchtretenden Hydraulikflüssigkeit für die Druckverhältnisse praktisch vernachlässigbar ist. Vorzugsweise sind die Löcher 52,52' bezüglich des Blähkörpers 40 an deren höchsten Stellen des äußersten Umfangs angeordnet. Bei der Anordnung der Löcher 52, 52' gemäß Figur 4 entfallen weitere Verbindungskanäle, die beispielsweise gemäß der Figur 3 mit den Bezugsziffern 36, 36' bezeichnet sind. In der Figur 4 übernehmen die Löcher 52, 52' die Funktion der Verbindungskanäle 22, 22' bzw. 36, 36' der Figuren 1 bzw. 3. Ansonsten arbeitet der Gegenstand gemäß der Figur 4 entsprechend den Gegenständen der Figuren 1 oder 3, auf die verwiesen wird.

Gewerbliche Anwendbarkeit:

Der hydraulische Schwingungsdämpfer gemäß der Erfindung kann überall dort eingesetzt werden, wo bei einer Maschine oder einem Maschinenteil Schwingungsempfindlichkeiten reduziert werden müssen. Insbesondere ist der hydraulische Schwingungsdämpfer zur Schwingungsreduzierung der Karosserie gegenüber den Rädern bzw. den Achsen bei einem Kraftfahrzeug und zur Stabilisierung der Insassenkabine eines Kraftfahrzeugs bestens geeignet.

### Liste der Bezugszeichen

- 1: Zylinder
- 2: Kolbenstange
- 3: Führungskolben
- 4, 5: Durchgänge
- 6: unteres Ende der Kolbenstange
- 7: Dämpfungskolben
- 8, 9: Arbeitskammern
- 10: Nut
- 11: Blähkörper
- 12: Ringraum
- 13: torusförmiger Durchlaß
- 14: Kanal
- 15, 16: Verbindungskanäle
- 17, 18: Schließventile
- 19, 20: Durchgänge der Ventile
- 21: Doppelbewegungspfeil
- 22, 22': Kanäle
- 23: Bewegungspfeil
- 24: Dämpfungs- und Führungskolben
- 25, 25': Simmerringe
- 26, 26': torusförmige Durchlässe
- 27, 27',:
- 28, 28': Bohrungen
- 29, 29': Nuten
- 30, 30': Ringkanäle
- 31, 31': Blähkörper
- 32: torusförmiger Durchlaß
- 33, 33': Verbindungskanäle
- 34: Doppelschließventil
- 35, 35': Ventildurchlässe
- 36, 36': Kanäle
- 37, 37': Ringräume
- 38: Kolben
- 39: Nut
- 40: Blähkörper
- 50, 50': Flächen des äußersten Umfangs der Blähkörper
- 51, 51': Geneigte Flächen
- 52, 52': Kleine Löcher
- 53: Zylinder
- 54: Vom Blähkörper und dem Zylinder umschlossener Zwischenraum

## Patentansprüche

1. Hydraulischer Schwingungsdämpfer mit veränderbarer Dämpfungscharakteristik, insbesondere für Kraftfahrzeuge, der mindestens einen mit einem Dämpfungsmedium gefüllten Zylinder (1;53) mit einer Kolbenstange (2) und einem Kolben (3;24) umfaßt, der das Volumen des Zylinders in zwei Arbeitskammern (8,9) aufteilt, wobei die gegenüber dem Zylinder relativ beweglichen Kolbenteile mit einem zwischen den Arbeitskammern angeordneten Durchlaß (13;26,26',32) versehen sind, der mittels eines elektrischen Schließventils (17,18;34) freigebbar oder verschließbar ist,
gekennzeichnet durch folgende Merkmale:
a) der Querschnitt des Kolbens (7;24) ist geringer als der freie Querschnitt des Zylinders (1) unter Belassung eines Spaltes (13;26,26',32) als Durchlaß zwischen der Zylinderwand und dem Kolben (7;24),
b) der Kolben (7;24) besitzt im Bereich des Spaltes (13;26,26',32) eine Nut (10;29,29'), die sich über den gesamten Umfang des Spaltes (13;26,26',32) erstreckt und in der ein in Richtung zur Zylinderwand reifenartig gewölbter, elastischer Blähkörper (11;31,31') angeordnet ist, der einerseits den Spalt (13;26,26',32) verschließt und andererseits das Volumen (12;37,37') der Nut (10;29,29') gegen den Durchlaß abdichtet
c) von jeder Arbeitskammer (8,9) ausgehend münden in die Nut (10;29,29') zwei Kanäle (15,16;33,33'), in denen jeweils das Schließventil (17,18;34) mit einem Durchgang (19,20;35,35') angeordnet ist.

2. Hydraulischer Schwingungsdämpfer nach Anspruch 1,
dadurch gekennzeichnet,
daß der Zylinder (1) und der Kolben (7;24) rotationssymmetrisch und der Durchlaß (13;26,26',32) zwischen beiden ein Ringspalt ist, wobei die Nut (10;29,29') und der in ihr angeordnete Blähkörper (11;31,31') in einer kreisförmigen Querschnittsebene sich befinden und längs des peripheren Umfangs des Kolbens (7;24) umlaufend angeordnet sind.

3. Hydraulischer Schwingungsdämpfer nach Anspruch 1 oder 2,
dadurch gekennzeichnet,
daß von der Nut (10) ausgehend je ein weiterer Kanal (22,22') innerhalb des Kolbens (7) in jede der Arbeitskammern (8,9) mündet.

4. Hydraulischer Schwingungsdämpfer nach Anspruch 1 oder 2,
dadurch gekennzeichnet,
daß die Nut innerhalb des Kolbens (24) aus zwei übereinander angeordnete Teilnuten (29,29') und der Blähkörper aus zwei Teilblähkörpern (31,31') bestehen, die jeweils in einer Teilnut (29,29') angeordnet sind, wobei in jede Teilnut (29,29') von den Arbeitskammern (8,9) ausgehend je ein Kanal (33,33') einmündet, in denen ein elektrisches Schließventil (34) mit je einem Durchgang (35,35') angeordnet ist, wobei derjenige Kanal (33), der von der der Kolbenstange (2) zugewandten Nut (29) ausgeht, in die von der Kolbenstange durchsetzte Arbeitskammer (9) und derjenige Kanal (33'), der von der der Kolbenstange (2) abgewandten Nut (29') ausgeht, in die andere Arbeitskammer (8) münden.

5. Hydraulischer Schwingungsdämpfer nach Anspruch 4,
dadurch gekennzeichnet,
daß die Schließventile in einem Doppelschließventil (34) mit zwei parallelen Durchgängen (35,35') zusammengefaßt sind.

6. Hydraulischer Schwingungsdämpfer nach den Ansprüchen 4 oder 5,
dadurch gekennzeichnet,
daß von jeder Teilnut (29,29') ausgehend je ein weiterer Kanal (36,36') innerhalb des Kolbens (24) in die der Teilnut (29,29') jeweils entgegengesetzt liegende Arbeitskammer (8,9) mündet.

7. Hydraulischer Schwingungsdämpfer nach Anspruch 1 oder 2,
dadurch gekennzeichnet,
daß der freie Querschnitt des Durchlasses (13;26,26',32) kleiner ist, als der freie Querschnitt des Blähkörpers (11;31,31') innerhalb der Nut (10;29,29').

8. Hydraulischer Schwingungsdämpfer nach Anspruch 1 oder 2,
dadurch gekennzeichnet,
daß der Kolben als Dämpfungskolben (7) an einem Führungskolben (3) angeordnet ist.

9. Hydraulischer Schwingungsdämpfer nach Anspruch 1 oder 2,
dadurch gekennzeichnet,
daß der Kolben als Führungs- und Dämpfungskolben (24) ausgebildet ist und im Bereich der die beiden Arbeitskammern (8,9) begrenzenden Stirnflächen peripher umlaufende abdichtende Führungsflächen (25,25') aufweist, die beidseitig die Durchlässe (26,26',32) einschließen, wobei von den Stirnflächen des Kolbens ausgehend Durchlaßkanäle (27,27') zu den Durchlässen (26,26',32) angeordnet sind.

10. Hydraulischer Schwingungsdämpfer nach Anspruch 5 oder 6,
dadurch gekennzeichnet,
daß die Querschnitte der Kanäle (22,22';36,36') geringer sind, als die Querschnitte derjenigen Kanäle (14,15;33,33'), in denen sich die Schließventile (17,18;34) befinden.

11. Hydraulischer Schwingungsdämpfer nach Anspruch 2 oder 4,
dadurch gekennzeichnet,
daß innerhalb des Blähkörpers (40) an dem äußersten Umfang (50,50') desselben kleine Entlüftungslöcher (52,52') angeordnet sind.

12. Hydraulischer Schwingungsdämpfer nach Anspruch 11,
dadurch gekennzeichnet,
daß die Entlüftungslöcher (52,52') im äußersten Umfang (50,50') des Blähkörpers (40) angeordnet sind, der umlaufend an der Zylinderwandung (53) abdichtend an liegt.

## Claims

1. Hydraulic vibration-damper with variable damping characteristic, especially for motor vehicles, which comprises at least one cylinder (1; 53) filled with a damping medium and having a piston rod (2) and a piston (3; 24), which divides the volume of the cylinder into two working chambers (8, 9), whereby the piston parts which can be moved relative to the cylinder are provided with a passage (13; 26, 26', 32) located between the working chambers, which can be opened or closed by means of an electric closing valve (17, 18; 34),
characterized by the following features:
a) the cross section of the piston (7; 24) is smaller than the free cross section of the cylinder (1) leaving open a gap (13; 26, 26',32) as the passage between the cylinder wail and the piston (7;24),
b) in the area of the gap (13; 26, 26', 32), the piston (7; 24) has a groove (10; 29, 29') which extends along the entire circumference of the gap (13; 26, 26', 32) and in which there is a flexible expansion element (11; 31. 31') curved in the shape of a tire in the direction of the cylinder wall which, on the one hand, closes the gap (13; 26, 26', 32) and, on the other hand, seals the volume (12; 37, 37') of the groove (10; 29, 29') with respect to the passage,
c) coming from each working chamber (8, 9) and opening up into the groove (10; 29, 29'), there are two channels (15, 16; 33, 33') in each of which the closing valve (17, 18; 34) is arranged together with an opening (19, 20; 30,35').

2. Hydraulic vibration-damper according to Claim 1,
characterized in that
the cylinder (1) and the piston (7; 24) are rotation-symmetrical and the passage (13; 26, 26', 32) between the two of them is an annular gap, whereby the groove (10, 29, 29') and the expansion element (11; 31, 31') in it are located in a circular cross section plane and arranged along the peripheral circumference of the piston (7; 24).

3. Hydraulic vibration-damper according to Claim 1 or 2,
characterized in that,
coming from the groove (10), another channel (22, 22') inside the piston (7) opens up into each of the working chambers (8, 9).

4. Hydraulic vibration-damper according to Claim 1 or 2,
characterized in that
the groove inside the piston (24) consists of two partial grooves (29, 29') and the expansion element consists of two partial expansion elements (31, 31') which are each positioned in a partial groove (29, 29'), whereby a channel (33, 33'), coming from the working chambers (8, 9), opens up into each partial groove (29, 29'), and each of these channels contains an electric closing valve (34), each having an opening (35, 35'), whereby the channel (33) which comes out of the groove (29) facing towards the piston rod (2) opens up into the working chamber (9) which is penetrated by the piston rod, whereas the channel (33') which comes out of the groove (29') facing away from the piston rod (2) opens up into the other working chamber (8).

5. Hydraulic vibration-damper according to Claim 4,
characterized in that
the closing valves are combined in a double closing valve (34) with two parallel openings (35, 35').

6. Hydraulic vibration-damper according to Claim 4 or 5,
characterized in that,
coming from each partial groove (29, 29'), another channel (36, 36') inside the piston (24) opens up into the working chamber (8, 9) which lies opposite to the partial groove (29, 29') in each case.

7. Hydraulic vibration-damper according to Claim 1 or 2,
characterized in that
the free cross section of the passage (13; 26, 26', 32) is smaller than the free cross section of the expansion element (11; 31, 31') inside the groove (10; 29, 29').

8. Hydraulic vibration-damper according to Claim 1 or 2,
characterized in that
the piston is arranged as a damping piston (7) on a guide piston (3).

9. Hydraulic vibration-damper according to Claim 1 or 2,
characterized in that
the piston is designed as a guide and damping piston (24) and, in the area of the faces delimiting the two working chambers (8, 9), the piston has peripherally sealing guide surfaces (25, 25') around it, which enclose the passages (26, 26', 32) on both sides, whereby, coming from the faces of the piston, there are passage channels (27, 27') to the passage (26, 26', 32).

10. Hydraulic vibration-damper according to Claim 5 or 6,
characterized in that
the cross sections of the channels (22, 22'; 33, 33') are smaller than the cross sections of those channels (14, 15; 33, 33') in which the closing valves (17, 18; 34) are located.

11. Hydraulic vibration-damper according to Claim 2 or 4,
characterized in that,
inside the expansion element (40) on the outermost circumference (50, 50') of said expansion element, there are no ventilation holes (52, 52').

12. Hydraulic vibration-damper according to Claim 11,
characterized in that
the ventilation holes (52, 52') are located in the outermost circumference (50, 50') of the expansion element (40) which is positioned so as to seal around the cylinder wall (53).

## Revendications

1. Amortisseur hydraulique de vibrations à propriétés variables d'amortissement, destiné en particulier à des véhicules automobiles et comportant au moins un cylindre (1;53) rempli d'un fluide d'amortissement avec une tige de piston (2) et un piston (3;24) qui divise le volume du cylindre en deux chambres de travail (8,9), les parties du piston relativement mobiles par rapport au cylindre présentant un passage (13;26,26',32) disposé entre les chambres de travail et pouvant être ouvert ou fermé au moyen d'une vanne de fermeture électrique (17,18;34),
caractérisé par les caractéristiques suivantes:
a) la section transversale du piston (7;24) est plus petite que la section transversale libre du cylindre (1) en laissant une fente (13;26,26',32) servant de passage entre la paroi du cylindre et le piston (7;24),
b) le piston (7;24) présente une rainure (10;29,29') dans la zone de la fente (13;26,26',32) s'étendant sur toute la circonférence de la fente (13;26,26',32) et dans laquelle est disposé un corps gonflé élastique (11;31,31') bombé comme un pneu vers la paroi du cylindre et qui, d'une part, ferme la fente (13;26,26',32) et, d'autre part, étanche le volume (12;37,37') de la rainure (10;29,29') contre le passage
c) à partir de chaque chambre de travail (8,9), deux canaux (15,16;33,33') dans lesquels est disposée respectivement la soupape de fermeture (17,18;34) avec un passage (19,20;35, 35') débouchent dans la rainure (10;29,29').

2. Amortisseur hydraulique de vibrations suivant la revendication 1
caractérisé par le fait
que le cylindre (1) et le piston (7;24) sont à symétrie de révolution et le passage (13;26,26',32) entre ceux-ci est une fente annulaire, la rainure (10;29,29') et le corps gonflé (11;31,31') disposé dans cette dernière se trouvant dans un plan circulaire de la section transversale et faisant le pourtour le long du périmètre du piston (7;24).

3. Amortisseur hydraulique de vibrations suivant l'une quelconque des revendications 1 ou 2
caractérisé par le fait
qu'un autre canal (22,22') respectivement qui part de la rainure (10) et s'étend à l'intérieur du piston (7), débouche dans chacune des chambres de travail (8,9).

4. Amortisseur hydraulique de vibrations suivant l'une quelconque des revendications 1 ou 2
caractérisé par le fait
que la rainure à l'intérieur du piston (24) consiste en deux rainures partielles (29,29') disposées l'une au-dessus de l'autre et le corps gonflé consiste en deux corps gonflés partiels (31,31') disposés chacun dans une rainure partielle (29,29'), dans chaque rainure partielle (29,29') débouchant un canal (33,33') provenant des chambres de travail (8,9) et dans lesdits canaux étant disposée une soupape de fermeture électrique (34) avec un passage (35,35') respectivement, le canal (33) qui part de la rainure (29) tournée vers la tige de piston (2) débouchant dans la chambre de travail (9) pénétrée par la tige de piston et le canal (33') qui part de la rainure (29') opposée à la tige de piston (2) débouchant dans l'autre chambre de travail (8).

5. Amortisseur hydraulique de vibrations suivant la revendication 4
caractérisé par le fait
que les soupapes de fermeture sont regroupées dans une soupape de fermeture double (34) présentant deux passages parallèles (35,35').

6. Amortisseur hydraulique de vibrations suivant l'une quelconque des revendications 4 ou 5
caractérisé par le fait
qu'un autre canal (36,36') respectivement partant de chaque rainure partielle (29,29') et s'étendant à l'intérieur du piston (24), débouche dans la chambre de travail (8,9) opposée à la rainure partielle (29,29').

7. Amortisseur hydraulique de vibrations suivant l'une quelconque des revendications 1 ou 2
caractérisée par le fait
que la section transversale libre du passage (13;26,26',32) est plus petite que la section transversale libre du corps gonflé (11;31,31') à l'intérieur de la rainure.

8. Amortisseur hydraulique de vibrations suivant l'une quelconque des revendications 1 ou 2
caractérisé par le fait
que le piston en tant que piston amortisseur (7) est disposé sur un piston de guidage (3).

9. Amortisseur hydraulique de vibrations suivant l'une quelconque des revendications 1 ou 2
caractérisé par le fait
que le piston est réalisé en tant que piston de guidage et d'amortissement (24) qui, dans la zone des faces frontales délimitant les deux chambres de travail (8,9), présente des surfaces de guidage étanchantes (25,25') circonférentielles enfermant les passages (26,26',32) des deux côtés, des canaux de passage (27,27') étant disposés qui partent des faces frontales du piston et débouchent dans les passages (26,26',32).

10. Amortisseur hydraulique de vibrations suivant l'une quelconque des revendication 5 ou 6
caractérisé par le fait
que les sections transversales des canaux (22,22';36,36') sont plus petites que les sections transversales des canaux (14,15;33,33') dans lesquels se trouvent les soupapes de fermeture (17,18:34).

11. Amortisseur hydraulique de vibrations suivant l'une quelconque des revendications 2 et 4
caractérisé par le fait
que de petits orifices de sortie d'air (52,52') sont disposés à l'intérieur du corps gonflé (40) sur le périmètre extérieur (50,50') de celui-ci.

12. Amortisseur hydraulique de vibrations suivant la revendication 11
caractérisé par le fait
que les orifices de sortie d'air (52,52') sont disposés sur le périmètre extérieur (50,50') du corps gonflé (40) adjacent à la paroi du cylindre (53) et assurant l'étanchéité.
